# FASCICULE DE BREVET EUROPEEN

(11) **EP 2 850 336 B1**
(45) Date de publication et mention de la délivrance du brevet: **08.06.2016**
(21) Numéro de dépôt: 13722503.3
(22) Date de dépôt: 18.04.2013
(51) Int. Cl.: F16F 9/49

(54) **AMORTISSEUR HYDRAULIQUE COMPRENANT UNE BUTEE DE FIN DE COURSE COMPORTANT UN PISTON**
HYDRAULICHER DÄMPFER MIT EINEM ENDSTOPP MIT KOLBEN
HYDRAULIC DAMPER COMPRISING AN END STOP COMPRISING A PISTON

(30) Priorité: 16.05.2012 FR 1254496
(43) Date de publication de la demande: 25.03.2015
(73) Titulaire: PSA Peugeot Citroën Automobiles S.A., 78140 Velizy Villacoublay (FR)
(72) Inventeur: GREMILLET, Eric, F-70200 La Vergenne (FR)
(74) Mandataire: Rosenberg, Muriel Sylvie
(86) Numéro de dépôt international: PCT/FR2013/050860
(87) Numéro de publication internationale: WO 2013/171388

(56) Documents cités:
- EP-A1- 1 375 957
- GB-A- 2 158 181
- GB-A- 191 102 992
- JP-A- 62 064 603
- US-A1- 2012 090 931

## Description

La présente invention concerne un amortisseur, en particulier pour la suspension d'un véhicule automobile, ainsi qu'un véhicule automobile équipé de ce type d'amortisseur.

Les véhicules automobiles comportent généralement des suspensions reliant des bras de suspension à la caisse du véhicule, comprenant pour chaque roue un ressort supportant la charge du véhicule, et un amortisseur qui freine les oscillations de ce ressort.

Un type d'amortisseur hydraulique connu comporte une tige disposée dans l'axe d'un corps d'amortisseur formant un tube, comprenant à une extrémité un piston coulissant dans ce tube, afin de séparer une chambre de compression se trouvant du côté opposé à la tige, et une chambre de détente traversée par cette tige.

La tige et le corps d'amortisseur sont fixés chacun sur un des deux éléments à relier, un élément de la suspension, ou la caisse du véhicule.

Les débattements de la suspension entraînent un coulissement du piston déplaçant le liquide d'une chambre vers l'autre, en passant par des orifices calibrés pouvant contenir des clapets, qui freinent le passage de ce fluide. Le freinage peut être différent dans le sens de la compression ou de la détente, pour obtenir une loi d'amortissement adaptée afin d'assurer le confort ainsi que la tenue de route du véhicule.

Un type d'amortisseur connu, présenté notamment par le document FR-A1-2914716, ou encore le document JP62-064603 qui est considéré comme l'art antérieur le plus pertinent, comporte une butée hydraulique de fin de course de compression qui se trouve au fond du corps d'amortisseur, sur laquelle vient buter l'extrémité de la tige comportant le piston, de manière à obtenir une fin de course progressive de cette tige qui évite un choc.

Toutefois, cette butée de fin de course comporte une unique loi de freinage, qui dépend de sa géométrie. On ne peut pas alors modifier facilement et rapidement la courbe de freinage, pour notamment faire des mises au point sur un véhicule.

La présente invention a notamment pour but d'éviter ces inconvénients de la technique antérieure.

Elle propose à cet effet un amortisseur hydraulique comprenant une partie mobile qui sépare une chambre de compression d'une chambre de détente, et une butée hydraulique de fin de course placée au fond de la chambre de compression, recevant l'appui de l'extrémité de cette partie mobile lors d'une fin de course de compression, caractérisé en ce que la butée de fin de course comporte un piston comprenant des perçages radiaux, qui reçoit l'appui de la partie mobile en fin de course, ce piston coulissant de manière ajustée dans un corps de butée pour fermer progressivement les perçages lors de sa course de compression, le piston recevant de manière ajustée un distributeur qui peut prendre plusieurs positions de montage permettant d'obstruer de manière différente les perçages de ce piston.

Un avantage de l'amortisseur selon l'invention, est que les différentes positions de montage du distributeur permettent facilement et de manière économique, par un démontage de l'amortisseur et en conservant les mêmes pièces, de changer la position de ce distributeur afin d'obtenir de nouvelles lois de freinage de la fin de course.

L'amortisseur selon l'invention peut de plus comporter une ou plusieurs des caractéristiques suivantes, qui peuvent être combinées entre elles.

Selon un mode de réalisation, le distributeur comporte une forme cylindrique qui est ajustée dans un alésage du piston.

Selon l'invention, le piston comporte des rangées de perçages alignées axialement, le distributeur comportant sur son pourtour des fentes axiales qui peuvent se trouver en face d'une ou de plusieurs de ces rangées, les perçages des autres rangées étant obstrués.

En particulier, le piston peut comporter trois rangées axiales de perçages, disposées à 120°.

Avantageusement, le piston comporte sur sa face recevant l'appui de la partie mobile, un perçage qui est bouché par cette partie mobile lors de son appui.

Avantageusement, la butée de fin de course comporte un ressort de rappel, qui applique une force rappelant le piston dans sa position de repos.

Selon un mode de réalisation, le corps de butée peut former un cylindre qui est fixé au fond d'un corps de l'amortisseur formant un tube.

Avantageusement, le corps de butée comporte des bossages extérieurs qui réalisent un centrage dans le tube du corps de l'amortisseur.

Avantageusement, le corps de butée comporte des tétons coulissant dans des rainures axiales du piston, qui limitent la course de sortie de ce piston hors du corps.

L'invention a aussi pour objet un véhicule automobile disposant d'amortisseurs hydrauliques pour amortir les débattements de la suspension, comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue d'ensemble d'un amortisseur selon l'invention ;
- la figure 2 est une vue de détail de la butée de fin de course de cet amortisseur ;
- la figure 3 est une vue fantôme de cette butée de fin de course assemblée ; et
- la figure 4 est une vue en coupe axiale de la partie supérieure de l'amortisseur, comprenant la butée de fin de course.

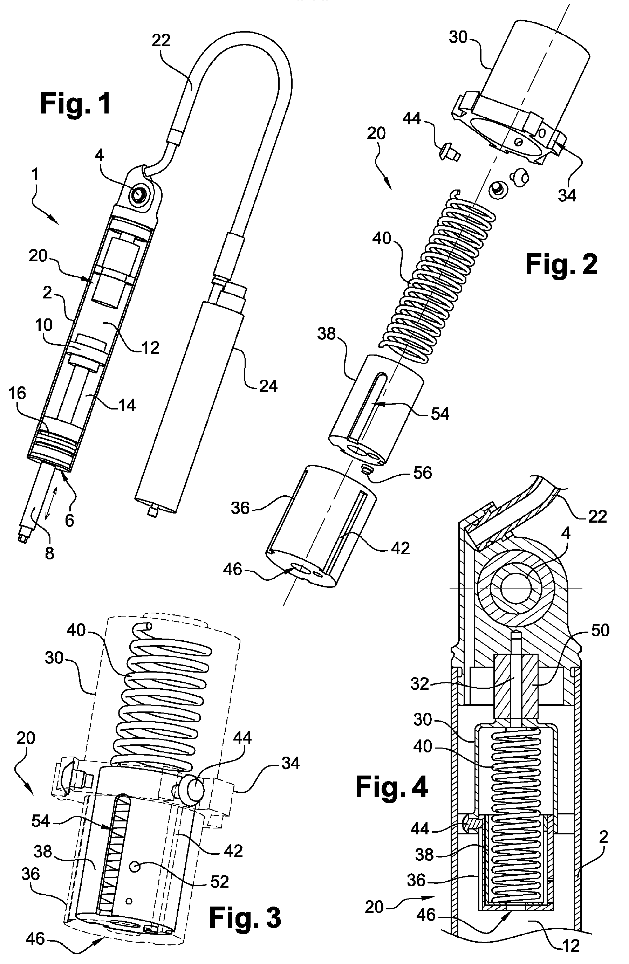

La figure 1 présente un amortisseur 1 comportant un corps d'amortisseur 2, comprenant à son extrémité supérieure un perçage monté sur une rotule 4, pour fixer ce corps sur un premier élément du véhicule. L'extrémité inférieure du corps d'amortisseur 2 comporte un guidage 6 recevant une tige coulissante 8, dont la partie inférieure est fixée sur un autre élément du véhicule, comportant un mouvement de suspension par rapport à ce premier élément.

L'extrémité supérieure de la tige 8 comporte un piston 10 coulissant dans le corps d'amortisseur 2, pour former une partie mobile délimitant une chambre de compression 12 se trouvant au-dessus, et une chambre de détente 14 se trouvant en-dessous. Des passages dans le piston 10 permettent un passage de fluide d'une chambre à l'autre, tout en freinant le débit du fluide pour assurer l'amortissement des mouvements de suspension.

La partie inférieure du corps d'amortisseur 2 comporte une butée de fin de course de détente 16 entourant la tige 8, qui freine la course du piston 10 lorsque l'amortisseur 1 arrive au bout de sa course de détente.

La partie supérieure du corps d'amortisseur 2 comporte une butée de fin de course de compression 20, qui reçoit l'appui de l'extrémité supérieure de la tige 8 quand l'amortisseur 1 arrive au bout de sa course de compression, pour freiner et arrêter cette course.

La chambre de compression 12 est reliée par un tuyau flexible 22 à un réservoir cylindrique extérieur 24, comprenant un piston coulissant qui sépare une chambre annexe recevant le fluide venant de cette chambre de compression, d'une chambre de mise en pression qui peut comporter un ressort ou un gaz sous pression.

La chambre annexe reçoit lors d'une compression de l'amortisseur 1, l'excédent de fluide qui ne peut rentrer dans la chambre de détente 14 comprenant une section inférieure à celle de la de chambre compression 12, à cause de la tige 8 la traversant. De plus, la chambre de mise en pression exerce par le fluide une force de détente sur l'amortisseur 1, qui s'ajoute à celle appliquée par le ressort de la suspension.

Les figures 2 à 4 présentent la butée de fin de course 20 comprenant un corps de butée 30 comportant un alésage intérieur ouvert vers le bas, et fermé vers le haut par une face transversale comportant un perçage central. Ce perçage central reçoit une vis axiale de fixation 32, qui traverse une cale cylindrique 50 pour venir se fixer dans la partie supérieure du corps d'amortisseur 2.

Un piston 36 comprenant un volume intérieur cylindrique ouvert vers le haut, est ajusté dans l'alésage du corps de butée 30, pour coulisser axialement avec une étanchéité limitant les pertes de fluide contenu dans le volume intérieur de la butée de fin de course 20, qui est compris dans ce piston et dans ce corps.

L'extrémité inférieure du piston 36 est fermée par une face transversale recevant l'appui de l'extrémité supérieure de la tige 8, quand l'amortisseur 1 arrive en fin de course de compression. La face transversale comporte un perçage central 46, qui est bouché par l'extrémité supérieure de la tige 8 pendant cette fin de course.

On a alors une compression du fluide contenu dans le volume intérieur de la butée 20 pendant la fin de course de compression, et un relâchement de la pression quand l'amortisseur 1 repart en détente, la tige 8 décollant de la face transversale du piston 36, et débouchant le perçage central 46.

Un distributeur cylindrique 38 ajusté dans un alésage du piston 36 formant le volume intérieur, comporte une face transversale inférieure comprenant un perçage ajusté sur le perçage central 46 de la face inférieure de ce piston.

Le distributeur 38 comporte un creux intérieur recevant un ressort hélicoïdal de rappel 40, qui prend appui sur ce distributeur et sur la partie supérieure du corps de butée 30. Le ressort 40 rappelle en permanence le piston 36 vers le bas, et le déplace dans ce sens quand la tige 8 a décollé de sa face transversale 36, le fluide rentrant alors dans la butée 20 par le perçage central 46 qui est ouvert.

Le piston 36 comporte sur sa surface cylindrique extérieure, trois rainures axiales 42 disposées angulairement à 120°,qui s'arrêtent un peu en dessous de l'extrémité supérieure de ce piston.

La base du corps de butée 30 comporte trois bossages extérieurs 34, dont les surfaces externes s'ajustent dans l'alésage cylindrique du tube formé par le corps d'amortisseur 2, de manière à centrer la butée dans ce tube.

Chaque bossage 34 du corps de butée 30, comporte un taraudage radial recevant une vis 44 comportant à son extrémité tournée vers le centre, un téton qui coulisse dans une des rainures axiales 42 du piston 36. Les tétons des vis 44 constituent un guidage linéaire du piston 36, qui limitent la course vers le bas de ce piston poussé par le ressort de rappel 40, quand ces tétons viennent buter sur l'extrémité supérieure des rainures axiales 42.

Le piston 36 comporte des perçages radiaux 52 alignés à la fois suivant trois rangées axiales disposées à 120°, et suivant plusieurs plans transversaux successifs. Le piston 36 étant sortie dans sa position basse, tous les perçages 52 se trouvent en dehors du corps de butée 30, et peuvent laisser sortir le fluide comprimé dans la butée 20.

Suivant la montée du piston 36 poussé par la tige 8, les perçages 52 sont successivement refermés quand ils rentrent dans le corps de butée 30, ce qui génère un freinage progressif de la fin de course de l'amortisseur 1 par réduction des surfaces de passage de fluide. En particulier, la succession de perçages 52 de chaque rangée axiale, peut comporter des diamètres différents de manière à régler la courbe de freinage de la butée 20.

Le distributeur 38 comporte sur son pourtour trois fentes axiales 54, disposées angulairement de manière à pouvoir suivant la position angulaire de ce distributeur, se trouver en face d'une, de deux ou de trois rangées de perçage 52, et à fermer les autres rangées.

La position angulaire du distributeur 38 est définie lors de l'assemblage de l'amortisseur 1, elle est maintenue par un pion de positionnement angulaire 56 qui s'emboîte à la fois dans un perçage de la face transversale de ce distributeur, et dans un perçage de la face transversale du piston 36. Le piston 36 ou le distributeur 38 comportent plusieurs perçages recevant le pion de positionnement 56, de manière à permettre différentes positions angulaires de ce distributeur.

On obtient ainsi une butée de fin de course 20 qui peut en conservant les mêmes éléments, par un simple positionnement du distributeur 38 lors de son assemblage, donner plusieurs courbes de freinage suivant qu'une ou plusieurs rangées de perçage 52 sont dégagées par ce distributeur, et permettent le passage du fluide.

On peut aussi suivant le même principe disposer plus de trois rangées de perçages 52, des rangées de perçage comportant des diamètres différents, ou un distributeur 38 comportant plus de trois positions angulaires, de manière à obtenir une variété de courbes de freinage plus importante.

La butée de fin de course 20 facilement réglable permet ainsi de gagner du temps dans la mise au point des amortisseurs, et laisse la possibilité aux utilisateurs d'effectuer eux-mêmes des réglages de la loi de freinage de fin de course.

## Revendications

1. - Amortisseur hydraulique comprenant une partie mobile (8) qui sépare une chambre de compression (12) d'une chambre de détente (14), et une butée hydraulique de fin de course (20) placée au fond de la chambre de compression, recevant l'appui de l'extrémité de cette partie mobile (8) lors d'une fin de course de compression, **caractérisé en ce que** la butée de fin de course (20) comporte un piston (36) comprenant des perçages radiaux (52), qui reçoit l'appui de la partie mobile (8) en fin de course, ce piston coulissant de manière ajustée dans un corps de butée (30) pour fermer progressivement les perçages lors de sa course de compression, le piston recevant de manière ajustée un distributeur (38) qui peut prendre plusieurs positions de montage permettant d'obstruer de manière différente les perçages de ce piston, et **en ce que** le piston (36) comporte des rangées de perçages (52) alignées axialement, le distributeur (38) comportant sur son pourtour des fentes axiales (54) qui peuvent se trouver en face d'une ou de plusieurs de ces rangées, les perçages des autres rangées étant obstrués.

2. - Amortisseur hydraulique selon la revendication 1, **caractérisé en ce que** le distributeur (38) comporte une forme cylindrique qui est ajustée dans un alésage du piston.

3. - Amortisseur hydraulique selon la revendication 1 ou 2, **caractérisé en ce que** le piston (36) comporte trois rangées axiales de perçages (52), disposées à 120°.

4. - Amortisseur hydraulique selon l'une quelconque des revendications précédentes, **caractérisé en ce que** le piston (36) comporte sur sa face recevant l'appui de la partie mobile (8), un perçage (46) qui est bouché par cette partie mobile lors de son appui.

5. - Amortisseur hydraulique selon l'une quelconque des revendications précédentes, **caractérisé en ce que** la butée de fin de course (20) comporte un ressort de rappel (40) qui applique une force rappelant le piston (36) dans sa position de repos.

6. - Amortisseur hydraulique selon l'une quelconque des revendications précédentes, **caractérisé en ce que** le corps de butée (30) forme un cylindre qui est fixé au fond d'un corps de l'amortisseur (2) formant un tube.

7. - Amortisseur hydraulique selon la revendication 6, **caractérisé en ce que** le corps de butée (30) comporte des bossages extérieurs (34), qui réalisent un centrage dans le tube du corps de l'amortisseur (2).

8. - Amortisseur hydraulique selon la revendication 6 ou 7, **caractérisé en ce que** le corps de butée (30) comporte des tétons (44) coulissant dans des rainures axiales (42) du piston (36), qui limitent la course de sortie de ce piston hors du corps.

9. - Véhicule automobile disposant d'amortisseurs hydrauliques (1) pour amortir les débattements de la suspension, **caractérisé en ce que** ces amortisseurs sont réalisés suivant l'une quelconque des revendications précédentes.

## Patentansprüche

1. Hydraulischer Dämpfer, der einen beweglichen Teil (8) umfasst, der eine Kompressionskammer (12) von einer Entspannungskammer (14) trennt, und einen hydraulischen Hubendanschlag (20), der auf dem Boden der Kompressionskammer platziert ist, der das Aufliegen des Endes dieses beweglichen Teils (8) bei einem Kompressionshubende aufnimmt, **dadurch gekennzeichnet, dass** der Hubendanschlag (20) einen Kolben (36) umfasst, der radiale Bohrungen (52) umfasst, der das Aufliegen des beweglichen Teils (8) am Hubende aufnimmt, wobei dieser Kolben justiert in einem Anschlagkörper (30) gleitet, um allmählich die Bohrungen bei seinem Kompressionshub zu verschließen, wobei der Kolben justiert einen Verteiler (38) aufnimmt, der mehrere Montagepositionen einnehmen kann, die es erlauben, die Bohrungen dieses Kolbens unterschiedlich zu verschließen, und dass der Kolben (36) Reihen von Bohrungen (52) aufweist, die axial ausgerichtet sind, wobei der Verteiler (38) auf seinem Umfang axiale Schlitze (54) umfasst, die gegenüber einer oder mehreren dieser Reihen liegen können, wobei die Bohrungen der anderen Reihen verschlossen sind.

2. Hydraulischer Dämpfer nach Anspruch 1, **dadurch gekennzeichnet, dass** der Verteiler (38) eine zylindrische Form umfasst, die in einer Bohrung des Kolbens justiert ist.

3. Hydraulischer Dämpfer nach Anspruch 1 oder 2, **dadurch gekennzeichnet, dass** der Kolben (36) drei Reihen axialer Bohrungen (52), die zu 120° angeordnet sind, umfasst.

4. Hydraulischer Dämpfer nach einem der vorhergehenden Ansprüche, **dadurch gekennzeichnet, dass** der Kolben (36) auf seiner Seite, die das Aufliegen des beweglichen Teils (8) empfängt, eine Bohrung (46) umfasst, die durch diesen beweglichen Teil bei seinem Aufliegen verschlossen wird.

5. Hydraulischer Dämpfer nach einem der vorhergehenden Ansprüche, **dadurch gekennzeichnet, dass** der Hubendanschlag (20) eine Rückstellfeder (40) umfasst, die eine Kraft anlegt, die den Kolben (36) in seine Ruhestellung zurückgestellt.

6. Hydraulischer Dämpfer nach einem der vorhergehenden Ansprüche, **dadurch gekennzeichnet, dass** der Anschlagkörper (30) einen Zylinder bildet, der auf dem Boden eines Körpers des Dämpfers (2), der eine Röhre bildet, befestigt ist.

7. Hydraulischer Dämpfer nach Anspruch 6, **dadurch gekennzeichnet, dass** der Anschlagkörper (30) äußere Höcker (34) umfasst, die eine Zentrierung in der Röhre des Körpers des Dämpfers (2) ausführen.

8. Hydraulischer Dämpfer nach Anspruch 6 oder 7, **dadurch gekennzeichnet, dass** der Anschlagkörper (30) Zapfen (44) umfasst, die in axialen Nuten (42) des Kolbens (36) gleiten, die den Ausgangshub dieses Kolbens außerhalb des Körpers begrenzen.

9. Kraftfahrzeug, das über hydraulische Dämpfer (1) verfügt, um das Ausschlagen der Aufhängung zu dämpfen, **dadurch gekennzeichnet, dass** diese Dämpfer nach einem der vorhergehenden Ansprüche hergestellt sind.

## Claims

1. A hydraulic damper comprising a mobile portion (8) which separates a compression chamber (12) from an expansion chamber (14), and a hydraulic end stop (20) positioned at the bottom of the compression chamber, receiving the contact of the end of this mobile portion (8) upon completion of a compression stroke, **characterized in that** the end stop (20) comprises a piston (36) comprising radial bores (52), which receives the contact of the mobile portion (8) at the end of travel, said piston sliding in an adjusted manner into a stop body (30) to gradually close the bores during the compression stroke of same, the piston receiving, in an adjusted manner, a distributor (38) which can assume a plurality of installation positions for blocking the bores of this piston in a different manner, and **in that** the piston (36) comprises rows of bores (52) aligned axially, the distributor (38) comprising on its circumference axial slots (54) which can be situated opposite one or several of these rows, the bores of the other rows being blocked.

2. The hydraulic damper according to Claim 1, **characterized in that** the distributor (38) comprises a cylindrical shape which is adjusted in a bore of the piston.

3. The hydraulic damper according to Claim 1 or 2, **characterized in that** the piston (36) comprises three axial rows of bores (52), disposed at 120°.

4. The hydraulic damper according to any one of the preceding claims, **characterized in that** the piston (36) comprises on its face receiving the contact of the mobile portion (8) a bore (46) which is blocked by this mobile portion during its contact.

5. The hydraulic damper according to any one of the preceding claims, **characterized in that** the end stop (20) comprises a return spring (40) which applies a force returning the piston (36) into its position of rest.

6. The hydraulic damper according to any one of the preceding claims, **characterized in that** the stop body (30) forms a cylinder which is fixed to the bottom of a body of the damper (2) forming a tube.

7. The hydraulic damper according to Claim 6, **characterized in that** the stop body (30) comprises exterior bosses (34), which realize a centring in the tube of the body of the damper (2).

8. The hydraulic damper according to Claim 6 or 7, **characterized in that** the stop body (30) comprises studs (44) sliding in axial grooves (42) of the piston (36), which limit the exit stroke of this piston outside the body.

9. A motor vehicle having hydraulic dampers (1) for damping the displacements of the suspension, **characterized in that** these dampers are realized according to any one of the preceding claims.
